Europäisches Patentamt

European Patent Office

Office européen des brevets

(19)

(11) Veröffentlichungsnummer: **0 284 804 B1**

(12) **EUROPÄISCHE PATENTSCHRIFT**

(45) Veröffentlichungstag der Patentschrift: 30.10.91

(51) Int. Cl.⁵: **B01J 37/12, B01J 37/02**

(21) Anmeldenummer: 88103212.2

(22) Anmeldetag: 02.03.88

(54) **Verfahren zur Oxidation der Oberfläche eines Katalysator-Trägerkörpers.**

(30) Priorität: 16.03.87 DE 3708515

(43) Veröffentlichungstag der Anmeldung:
05.10.88 Patentblatt 88/40

(45) Bekanntmachung des Hinweises auf die
Patenterteilung:
30.10.91 Patentblatt 91/44

(84) Benannte Vertragsstaaten:
CH DE ES FR GB IT LI SE

(56) Entgegenhaltungen:
FR-A- 1 584 370
US-A- 3 944 504
US-A- 3 969 082
US-A- 4 247 422

(73) Patentinhaber: Emitec Gesellschaft für Emissionstechnologie mbH
Hauptstrasse 150
W-5204 Lohmar 1(DE)

(72) Erfinder: Cyron, Theodor, Dipl.-Ing.
Kurt-Schumacher-Strasse 12
W-5060 Bergisch Gladbach 1(DE)

(74) Vertreter: Fuchs, Franz-Josef, Dr.-Ing. et al
Postfach 22 13 17
W-8000 München 22(DE)

## Beschreibung

Die vorliegende Erfindung betrifft ein Verfahren zur Oxidation der Oberfläche eines Katalysator-Trägerkörpers aus einer aluminiumhaltigen Eisenlegierung nach dem Oberbegriff des Anspruchs 1 bzw 2. Aus der DE-A-24 22 851 ist ein solches Oxidationsverfahren bekannt. Dort werden auch Beispiele für geeignete Eisenlegierungen und deren weitere Behandlung bei der Herstellung eines Katalysators beschrieben.

Nach dem Stand der Technik erfolgt die Oxidation solcher Katalysator-Trägerkörper an der Luft, wobei sich eine Schicht aus Aluminiumoxid an der Oberfläche der Eisenlegierung bildet. Es hat sich Jedoch gezeigt, daß insbesondere bei der Oxidation der Innenflächen von engen Kanälen mit einem kleinen Verhältnis von Querschnitt zu Länge, so wie sie bei metallischen Matrixkörpern für Katalysatoren vorliegen, die Anwesenheit des in der Luft enthaltenen Stickstoffes die Ausbildung einer geschlossenen, korrosionsschützenden Oberflächenschicht aus Aluminiumoxid verhindert, weil der Stickstoff der durch den Oxidationsprozess an Sauerstoff verarmten Luft mit dem Aluminium an der Oberfläche einer aluminiumhaltigen Eisenlegierung bzw. Eisen-Chrom-Legierung unter Bildung von Aluminiumnitrid reagiert. Dieses an der Metalloberfläche in die schützende Aluminiumoxidschicht eingelagerte Aluminiumnitrid ist nicht temperaturstabil und führt bei hoher thermischer Betriebsbelastung des metallischen Katalysator-Trägerkörpers zur Zerstörung der Schutzschicht und Schädigung des metallischen Grundwerkstoffes durch innere Korrosion.

Aus der FR-A-1 584 370 ist bereits eine Oxidation aluminiumhaltiger Nickellegierungen zu im wesentlichen Aluminiumoxid unter Ausschluß von Stickstoff bei erhöhter Temperatur bekannt. Hinweise für die vorteilhafte Anwendung dieses Verfahrens bei Katalysator-Trägerkörpern und deren Legierungen werden jedoch nicht gegeben.

Aufgabe der vorliegenden Erfindung ist daher die Schaffung eines Verfahrens zur Oxidation der Oberfläche eines Trägerkörpers, welche die genannten Nachteile vermeiden und zu geschlossenen und thermisch stabilen Aluminium-Oxid-Schutzschichten führen.

Zur Lösung dieser Aufgabe werden Verfahren mit den Merkmalen des Anspruchs 1 bzw. 2 vorgeschlagen. Durch Ausschluß von Stickstoff bei der Oxidation der Oberfläche können sich keine störenden Nitride bilden.

Bei der Oxidation sollte darauf geachtet werden, daß diese nicht zu schnell durchgeführt wird, da dann die sich bildenden Oberflächen abplatzen können. Es wird daher vorgeschlagen, die Oxidation entweder in einer reinen Sauerstoffatmosphäre mit verringertem Druck von beispielsweise 10 - 300 mbar durchzuführen oder aber ein Gemisch aus Sauerstoff und Edelgasen zu verwenden, in dem dann der Sauerstoffpartialdruck entsprechend niedrig gehalten werden kann. Die Verwendung einer reinen Sauerstoffatmosphäre hat bei der Oxidation von Wabenkörpern mit kleinen Zellendurchmessern und langen Kanälen den Vorteil, daß eine sehr gleichmäßige Oxidschicht gebildet werden kann, ohne daß eine zusätzliche Konvektion in den einzelnen Zellen nötig wäre. Bei Verwendung von Sauerstoffgemischen oder auch bei der nach dem Stand der Technik bekannten Oxidation in Luft kann es vorkommen, daß der Sauerstoffanteil in den Zellen völlig verbraucht wird, ohne daß schnell genug Sauerstoff von außen nachdiffundieren kann. Dies führt zu einer ungleichmäßigen Oxidschicht auf der Metalloberfläche mit vermindertem Schutz des Grundwerkstoffes gegen Korrosion bei hohen thermischen Belastungen. Bei Verwendung von reinem Sauerstoff kann dieses Problem nicht auftreten, da der zur Oxidation verbrauchte Sauerstoff sofort durch nachströmenden Sauerstoff ersetzt wird.

Besonders ökonomisch ist es natürlich, gemäß Anspruch 3, die erfindungsgemäße Oxidation mit einem Lötprozess oder einer ohnehin notwendigen Wärmebehandlung zu verbinden.

Ein nach dem erfindungsgemäßen Verfahren hergestelltes Produkt zeichnet sich dadurch aus, daß die Oxidschicht an der Oberfläche des Katalysator-Trägerkörpers keine oder nur ganz geringe Nitridanteile enthält. Im übrigen brauchen die bekannten Herstellungsverfahren für Katalysator-Trägerkörper und die katalytisch aktiven Beschichtungen nicht verändert zu werden.

## Patentansprüche

1. Verfahren zur Oxidation der Oberfläche eines Katalysator-Trägerkörpers aus einer aluminiumhaltigen Eisenlegierung zu im wesentlichen Aluminiumoxid, **dadurch gekennzeichnet,** daß die Oxidation unter Ausschluß von Stickstoff in einer im wesentlichen aus Sauerstoff bestehenden Atmosphäre unter einem Druck von 10 bis 300 mbar bei einer Temperatur > 900 ° C durchgeführt wird.

2. Verfahren zur Oxidation der Oberfläche eines Katalysator-Trägerkörpers aus einer aluminiumhaltigen Eisenlegierung zu im wesentlichen Aluminiumoxid, **dadurch gekennzeichnet,** daß die Oxidation unter Ausschluß von Stickstoff in einem Gemisch aus Sauerstoff und einem oder mehreren Edelgas(en) bei einem Sauerstoffpartialdruck von 10 bis 300 mbar und bei einer Temperatur > 900 ° C durchgeführt wird.

3. Verfahren nach Anspruch 1 oder 2, **dadurch gekennzeichnet,** daß die Oxidation bei gelöteten Katalysator-Trägerkörpern während der Abkühlphase nach dem Löten oder bei einer Wärmebehandlung durchgeführt wird.

## Claims

1. A method for oxidizing the surface of a catalyst carrier body made from an aluminium-containing iron alloy substantially to aluminium oxide, characterised in that the oxidation is carried out, with the exclusion of nitrogen, in an atmosphere consisting substantially of oxygen at a pressure of from 10 to 300 mbar and a temperature of >900°C.

2. A method for oxidizing the surface of a catalyst carrier body of an aluminium-containing iron alloy substantially to aluminium oxide, characterised in that the oxidation is carried out, with the exclusion of nitrogen, in a mixture of oxygen and one or several inert gases, at an oxygen partial pressure of from 10 to 300 mbar and at a temperature of > 900°C.

3. A method according to claim 1 or 2, characterised in that the oxidation with soldered catalyst carrier bodies is carried out during the cooling phase after soldering or with a heat treatment.

## Revendications

1. Procédé d'oxydation essentiellement en oxyde d'aluminium de la surface d'un support de catalyseur en un alliage de fer contenant de l'aluminium, caractérisé en ce qu'il consiste à effectuer l'oxydation à l'abri de l'azote, dans une atmosphère constituée essentiellement d'oxygène, sous une pression de 10 à 300 mbar, et à une température supérieure à 900°C.

2. Procédé d'oxydation essentiellement en oxyde d'aluminium de la surface d'un support de catalyseur en un alliage de fer contenant de l'aluminium, caractérisé en ce qu'il consiste à effectuer l'oxydation à l'abri de l'azote dans un mélange d'oxygène et d'un ou de plusieurs gaz rares, sous une pression partielle d'oxygène de 10 à 300 mbar, et à une température supérieure à 900°C.

3. Procédé suivant la revendication 1 ou 2, caractérisé en ce qu'il consiste à effectuer l'oxydation, pour des supports de catalyseurs soudés, pendant la phase de refroidissement après la soudure ou lors d'un traitement thermique.